(19) Europäisches Patentamt / European Patent Office / Office européen des brevets

(11) **EP 4 583 041 A1**

(12) **EUROPEAN PATENT APPLICATION**

(43) Date of publication:
**09.07.2025 Bulletin 2025/28**

(21) Application number: **24211601.0**

(22) Date of filing: **08.11.2024**

(51) International Patent Classification (IPC):
*G06T 5/60* (2024.01)

(52) Cooperative Patent Classification (CPC):
**G06T 5/60;** G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.01.2024 CN 202410014753**

(71) Applicant: **Zhuhai Pantum Electronics Co., Ltd. Zhuhai, Guangdong (CN)**

(72) Inventor: **WEI, Zhong Zhuhai (CN)**

(74) Representative: **Sun, Yiming HUASUN Patent- und Rechtsanwälte Friedrichstraße 33 80801 München (DE)**

(54) **IMAGE RESTORATION METHOD, DEVICE, APPARATUS AND STORAGE MEDIUM**

(57) The disclose provides an image restoration method, device, apparatus and storage medium, and relates to the field of image processing technology. The method includes obtaining a to-be-restored image, target text information corresponding to the to-be-restored image, and target restoration type(s), where the target text information is used to describe the to-be-restored image; inputting the to-be-restored image, the target text information and the target restoration type(s) into an image restoration model for image restoration processing, to obtain a restored target image corresponding to the to-be-restored image, where the image restoration model is obtained by training sub-restoration models corresponding to the different restoration types. The present disclosure can greatly improve the efficiency of image restoration, more accurately restore the to-be-restored image, and obtain a restored target image with better effect.

Obtain to-be-restored image, target text information corresponding to to-be-restored image, and target restoration type, where the target text information is used to describe to-be-restored image — S201

Input to-be-restored image, target text information and target restoration type into image restoration model for image restoration processing to obtain restored target image corresponding to to-be-restored image, where the image restoration model is obtained by training sub-restoration models corresponding to different restoration types — S202

FIG. 2

EP 4 583 041 A1

**Description**

**CROSS-REFERENCE TO RELATED DISCLOSURE**

This application claims the priority of Chinese Patent Application No. 202410014753.1 filed on January 3, 2024, the content of which is incorporated herein by reference in its entirety.

**TECHNICAL FIELD**

The present disclosure relates to the field of image processing technology, in particular to an image restoration method, device, apparatus and storage medium.

**BACKGROUND**

Image restoration refers to the process of reconstructing the missing or damaged parts of an image. The restoration task requires that the restored image be as natural as possible and as close to the original image as possible. By restoring the image, noise, scratches, missing parts, and occlusions in the image may be removed to improve the image quality.

Currently, a Gaussian filter-based image restoration method is usually used to restore a to-be-restored image to obtain a restored image. For to-be-restored images with different restoration problems, a filter needs to be manually designed. However, the above method is inefficient in restoring to-be-restored images.

**SUMMARY**

The present disclosure provides an image restoration method, device, apparatus and storage medium to solve the problem of low efficiency in restoring a to-be-restored image using current methods.

One aspect of the present disclosure provides an image restoration method, and the method includes acquiring a to-be-restored image, target text information corresponding to the to-be-restored image, and a target restoration type(s), where the target text information is used to describe the to-be-restored image; and inputting the to-be-restored image, the target text information and the target restoration type(s) into an image restoration model for image restoration processing to obtain a restored target image corresponding to the to-be-restored image, where the image restoration model is obtained by training sub-restoration models corresponding to the different restoration types.

A second aspect of the present disclosure provides an image restoration device, and the device includes a first acquisition module configured to acquire a to-be-restored image, target text information corresponding to the to-be-restored image and a target restoration type(s), where the target text information is used to describe the to-be-restored image; and a processing module configured to input the to-be-restored image, the target text information and the target restoration type(s) into an image restoration model for image restoration processing to obtain a restored target image corresponding to the to-be-restored image, where the image restoration model is obtained by training sub-restoration models corresponding to different restoration types.

A third aspect of the present disclosure provides an electronic device, and the device includes a processor and a memory communicatively coupled to the processor, where the memory stores computer-executable instructions, and the processor executes the computer-executable instructions stored in the memory to implement the image restoration method according to the first aspect of the present disclosure.

A fourth aspect of the present disclosure provides a computer-readable storage medium, where the computer-readable storage medium stores computer program instructions, and when the computer program instructions are executed, the image restoration method according to the first aspect of the present disclosure is implemented.

The image restoration method, device, apparatus and storage medium provided by the present disclosure obtain a to-be-restored image, target text information corresponding to the to-be-restored image, and the target restoration type(s), where the target text information is used to describe the to-be-restored image. The to-be-restored image, the target text information, and the target restoration type(s) are input into an image restoration model for image restoration processing to obtain a restored target image corresponding to the to-be-restored image, where the image restoration model is obtained by training sub-restoration models corresponding to different restoration types respectively. The present disclosure performs image restoration on the to-be-restored image through the image restoration model, where the image restoration model is obtained by training sub-restoration models corresponding to different restoration types respectively, which may greatly improve the efficiency of image restoration. The target text information used to describe the to-be-restored image is input into the image restoration model, which may accurately describe image information in a more comprehensive and exhaustive manner, and may enable the image restoration model to more accurately perform image restoration on the to-be-restored image to obtain a restored target image with better effect.

## BRIEF DESCRIPTION OF THE DRAWINGS

In order to more clearly illustrate the technical solutions of the embodiments of the present disclosure, the drawings essential for use in the embodiments will be briefly introduced below. Apparently, the drawings described below are only some embodiments of the present disclosure. For persons having ordinary skills in the art, other drawings may be obtained based on these drawings without making creative efforts.

FIG. 1 is a schematic diagram of an application scenario in accordance with an embodiment of the present disclosure;

FIG. 2 is a flow chart of an image restoration method in accordance with an embodiment of the present disclosure;

FIG. 3 is a flow chart of an image restoration model training method in accordance with an embodiment of the present disclosure;

FIG. 4 is a flow chart of a sub-restoration model training method in accordance with an embodiment of the present disclosure;

FIG. 5 is a schematic structural diagram of an image restoration device in accordance with an embodiment of the present disclosure; and

FIG. 6 is a schematic structural diagram of an electronic device in accordance with an embodiment of the present disclosure.

## DETAILED DESCRIPTION

In order to make the purpose, technical solution and advantages of the embodiments of the present disclosure clearer, the technical solution in the embodiments of the present disclosure will be clearly and comprehensively described below in conjunction with the drawings in the embodiments of the present disclosure. Apparently, the described embodiments are part of the embodiments of the present disclosure, not all of the embodiments. Based on the embodiments in the present disclosure, all other embodiments obtained by persons skilled in the art without making creative efforts are within the scope of protection of this disclosure.

It should be noted that the user information (including but not limited to user device information, user personal information, etc.) and data (including but not limited to data used for analysis, stored data, displayed data, etc.) involved in this disclosure are all information and data authorized by the user or fully authorized by all parties, and the collection, use and processing of relevant data comply with the relevant laws, regulations and standards of relevant countries and regions, and provide corresponding operation entries for users to choose to authorize or refuse.

Currently, an image restoration method based on Gaussian filtering is usually used to restore a to-be-restored image to obtain a restored image. Here, for images to be restored with different restoration problems, filters need to be manually designed. However, the restoration of the to-be-restored image by the above method has the problem of low efficiency. In addition, image restoration methods based on mean filtering, median filtering, bilateral filtering or wavelet denoising may also be used, which also require manual design of filters, resulting in low efficiency of image restoration and poor performance for images with different noise types and intensities.

In view of the foregoing problems, the present disclosure provides an image restoration method, device, apparatus and storage medium, which performs image restoration processing by inputting a to-be-restored image, image description information corresponding to the to-be-restored image and the restoration type into an image restoration model to obtain a restored target image corresponding to the to-be-restored image. Here, the image restoration model is obtained by training sub-restoration models corresponding to the different restoration types respectively, which may greatly improve the efficiency of image restoration. The image restoration model may identify an area to be optimized in the to-be-restored image based on the image description information, so that the to-be-restored image may be restored more accurately, and the restored target image with better effect may be obtained.

In the following, the application scenarios of the solutions provided in this disclosure are first described with specific embodiments.

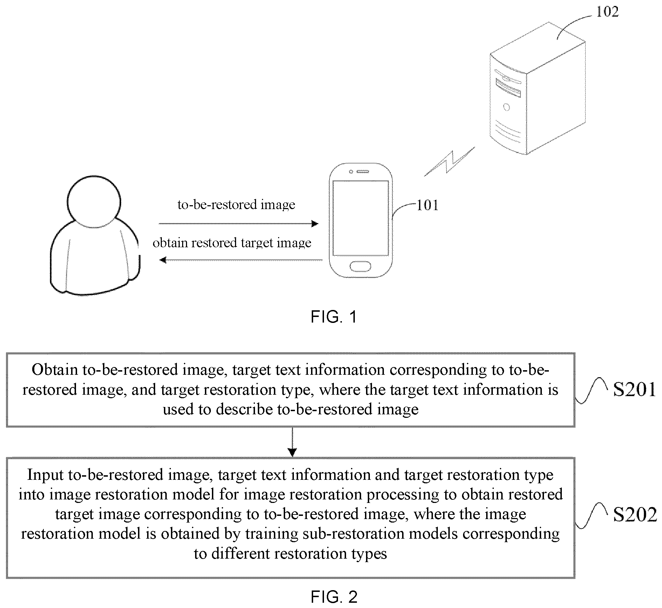

FIG. 1 is a schematic diagram of an application scenario in accordance with an embodiment of the present disclosure. As shown in FIG. 1, in this application scenario, the server 102 obtains a to-be-restored image, the image description information corresponding to the to-be-restored image, and the restoration type input by a user through the client 101. The server 102 performs image restoration processing on the to-be-restored image based on the to-be-restored image, the image description information corresponding to the to-be-restored image, and the restoration type to obtain a restored target image corresponding to the to-be-restored image. The server 102 sends the restored target image to the client 101, and the client 101 displays the restored target image to the user.

It should be noted that FIG. 1 is merely a schematic diagram of an application scenario in accordance with an embodiment of the present disclosure. The embodiment of the present disclosure does not limit the devices included in FIG. 1, nor does it limit the positional relationship between the devices in FIG. 1.

The technical solution of the present disclosure is described in detail hereinafter through specific embodiments. It should be noted that the following specific embodiments may be combined with each other, and the same or similar concepts or processes may not be described in detail in some embodiments.

FIG. 2 is a flow chart of an image restoration method in accordance with an embodiment of the present disclosure. The method of the embodiments of the present disclosure may be applied to an electronic device, which may be a server or a server cluster. As shown in FIG. 2, the method of the embodiment of the present disclosure includes:

S201: Obtain a to-be-restored image, target text information corresponding to the to-be-restored image, and a target restoration type, where the target text information is used to describe the to-be-restored image.

In the embodiments of the present disclosure, the to-be-restored image may be input by a user to an electronic device executing the embodiments of the disclosed method or may be sent by other devices to the electronic device executing the embodiments of the disclosed method. The to-be-restored image is an original image corresponding to at least one target restoration type. Optionally, the target restoration type includes at least one of image noise, image blur, image occlusion, and image loss. Here, image occlusion refers to a part of the content in an image having mosaics.

Optionally, the target text information is information obtained after a user describes the to-be-restored image.

Exemplarily, the target text information is the information obtained after the user customizes the description of the to-be-restored image. The target text information is a natural language description of the to-be-restored image, which may reflect the rich semantic information in the to-be-restored image. Specifically, exemplary target text information can be "there is a green tree under the blue sky and white clouds." For the target text information, for example, a semantic feature sequence may be obtained through a trained word vector model for subsequent processing procedures. It is to be noted that the current related technology usually generates corresponding text information based on an image, while the target text information in the embodiments of the present disclosure is obtained by a user customizing the description of the to-be-restored image, which may more comprehensively and exhaustively describe the image information accurately, thereby more quickly and accurately identifying the to-be-restored image.

Optionally, the target restoration type may be configured by the user, or may be obtained based on the content described in the target text information.

For example, during the implementation, the user inputs the to-be-restored image into the electronic device executing the embodiments of the disclosed method, and configures the target text information and the target restoration type corresponding to the to-be-restored image. Accordingly, the electronic device executing the embodiments of the disclosed method may obtain the to-be-restored image, the target text information and the target restoration type corresponding to the to-be-restored image.

S202: Input the to-be-restored image, target text information and target restoration type into an image restoration model for image restoration processing to obtain a restored target image corresponding to the to-be-restored image, where the image restoration model is obtained by training sub-restoration models corresponding to different restoration types.

Exemplarily, after obtaining the to-be-restored image, the target text information corresponding to the to-be-restored image, and the target restoration type, the to-be-restored image, the target text information, and the target restoration type may be input into the image restoration model for image restoration processing to obtain the restored target image corresponding to the to-be-restored image. Here, the image restoration model is obtained by training the sub-restoration models corresponding to the different restoration types respectively. A sub-restoration model is, for example, a convolutional neural network model or a generative adversarial network model. The sub-restoration models and the restoration types have a one-to-one correspondence. For example, if the restoration type is image noise, the restoration type has a corresponding sub-restoration model. It is to be noted that when a single-task image restoration model is used to restore multiple (i.e., two or more) restoration types that need to be restored at the same time, when performing image restoration through the single-task image restoration model, the corresponding image restoration process needs to be performed for different restoration types in sequence. The time consumed for image restoration is linearly related to the number of restoration types required. In actual application scenarios, different tasks may be selected for image restoration according to the restoration type required by the user. When the user chooses to restore an image corresponding to one specific target restoration type (i.e., one type of problem), the single-task image restoration model is used. When the user chooses to repair images corresponding to multiple target restoration types (i.e., multiple types of problems), a multi-task image restoration model is used. This allows for quick processing of the to-be-restored image, reducing the optimization time for the to-be-restored image.

When the image restoration model performs image restoration processing, it may determine the sub-restoration model corresponding to the target restoration type according to the target restoration type, and input the to-be-restored image and the target text information to the sub-restoration model corresponding to the target restoration type for image restoration processing, so that the restored target image corresponding to the to-be-restored image may be obtained based on the restored image output by the sub-restoration model and the target restoration type. Here, the sub-restoration model may obtain important information about a specific area or object in the to-be-restored image according to the target text information. This information may guide the attention of the sub-restoration model to make it more focused on the area related to the target text information, thereby improving the accuracy and interpretability of the sub-restoration model. For example, assuming that the target text information is "under the blue sky and white clouds, there is a green tree with mosaic on the left side of the lake," for the "mosaic" in the target text information, the attention of the sub-restoration model may be guided to make it more focused on the "mosaic" and the surrounding area of the "mosaic."

Further, optionally, for inputting the to-be-restored image, the target text information and the target restoration type into the image restoration model for image restoration processing to obtain a restored target image corresponding to the to-be-restored image, it may include: inputting the to-be-restored image, the target text information and the target restoration type into the image restoration model; if the number of target restoration types is one, inputting the to-be-restored image and the target text information into the sub-restoration model corresponding to the target restoration type to obtain a restored target image corresponding to the to-be-restored image; if the number of target restoration types is more than one, inputting the to-be-restored image and the target text information into a sub-restoration model corresponding to each target restoration type respectively to obtain restored images output by multiple sub-restoration models respectively; and performing fusion processing on the multiple restored images according to a weight corresponding to each target restoration type to obtain a restored target image corresponding to the to-be-restored image.

Exemplarily, after the to-be-restored image, the target text information and the target restoration type are input into the image restoration model, the image restoration model determines whether the number of target restoration types is one. If the number of target restoration types is one, the image restoration model is the sub-restoration model corresponding to the target restoration type. The to-be-restored image and the target text information are input into the sub-restoration model corresponding to the target restoration type, and the restored target image corresponding to the to-be-restored image may be obtained. If the number of target restoration types is more than one, the image restoration model includes multiple sub-restoration models corresponding to the target restoration types one by one. The to-be-restored image and the target text information are respectively input into the sub-restoration model corresponding to each target restoration type, and the restored images output by the multiple sub-restoration models are obtained. According to the weight corresponding to each target restoration type, the multiple restored images are fused to obtain the restored target image corresponding to the to-be-restored image.

Optionally, when multiple restored images are fused according to the weight corresponding to each target restoration type to obtain a restored target image corresponding to the to-be-restored image, the process includes: for each pixel at a same pixel position in the multiple restored images, according to the pixel value of the pixel and the weight corresponding to the pixel, obtaining a weighted target pixel value; according to the target pixel value at each pixel position, obtaining the restored target image corresponding to the to-be-restored image.

Exemplarily, it is assumed that the number of target restoration types corresponding to the to-be-restored image is two, one of which is image noise, and the corresponding weight is represented by alpha1. The sub-restoration model corresponding to the target restoration type is used to remove image noise, and the output restored target image is represented by qz_image. The other target restoration type is image missing, and the corresponding weight is represented by alpha2, for example. The sub-restoration model corresponding to the target restoration type is used to fill the actual content of the image, and the output restored target image is represented by tb_image. The sum of alpha1 and alpha2 is equal to 1. For each pixel at the same pixel position in the above two restored target images, the weighted pixel value (e.g., represented by weighted_pixel) is obtained by the following formula:

$$weighted\_pixel = alpha1 * qz\_image[i] + alpha2 * tb\_image[i]$$

The weighted pixel value is used as the pixel value of the pixel at the same pixel position in the restored target image. After completing the processing of all pixel positions, the final restored target image is obtained.

It is to be noted that the image restoration model controls the contribution of different restoration types to the final restored image by adjusting the values of alpha1 and alpha2. For specific information on how to train the image restoration model, refer to the subsequent embodiments, details of which will not be described here.

The image restoration method provided in the embodiments of the present disclosure obtains the to-be-restored image, the target text information corresponding to the to-be-restored image, and the target restoration type, where the target text information is used to describe the to-be-restored image. The to-be-restored image, the target text information, and the target restoration type are input into the image restoration model for image restoration processing to obtain a restored target image corresponding to the to-be-restored image. The image restoration model is obtained by training sub-restoration models corresponding to different restoration types respectively. The embodiments of the present disclosure perform image restoration on the to-be-restored image through the image restoration model, where the image restoration model is obtained by training sub-restoration models corresponding to different restoration types respectively, which may greatly improve the efficiency of image restoration. The target text information used to describe the to-be-restored image is input into the image restoration model, which may more comprehensively and exhaustively describe the image information of the to-be-restored image accurately, and may enable the image restoration model to more accurately perform image restoration on the to-be-restored image, and obtain a restored target image with better effect.

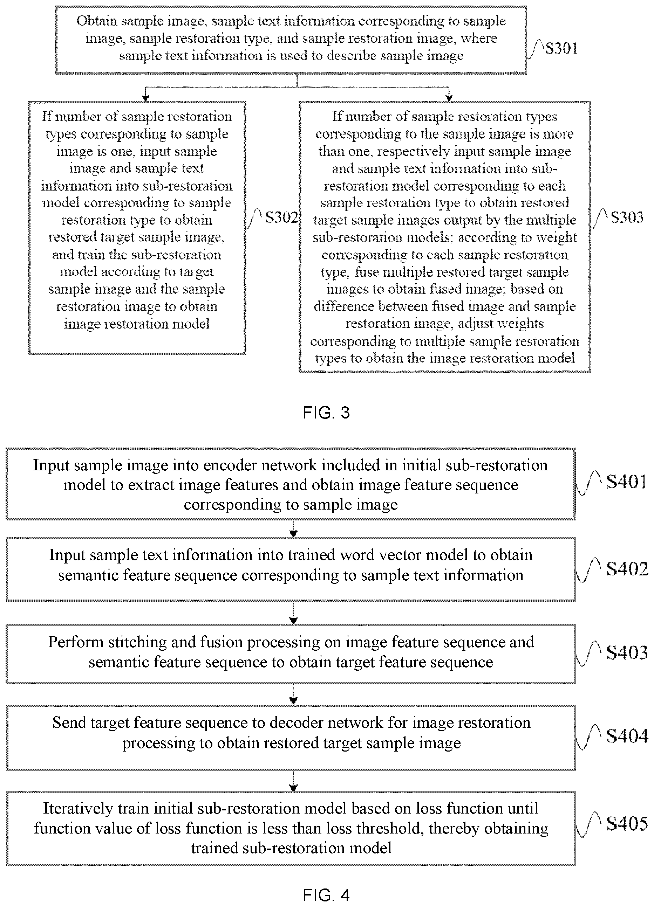

FIG. 3 is a flow chart of an image restoration model training method in accordance with an embodiment of the present disclosure. As shown in FIG. 3, the method of the embodiments of the present disclosure may include:

S301: Obtain a sample image, sample text information corresponding to the sample image, a sample restoration type, and a sample restoration image, where the sample text information is used to describe the sample image.

Exemplarily, the sample image is a to-be-restored image, the sample text information corresponding to the sample image is used to describe the sample image, and the sample text information is, for example, information obtained after a user customizes the description of the sample image. The sample restoration type includes at least one of image noise, image blur, image occlusion, and image missing. The sample restoration image is the original image corresponding to the sample image and does not require image restoration, and the sample restoration image may be understood as a reference image for image restoration of the sample image.

S302: If the number of sample restoration types corresponding to the sample image is one, input the sample image and sample text information into the sub-restoration model corresponding to the sample restoration type to obtain a restored target sample image, and train the sub-restoration model according to the target sample image and the sample restoration image to obtain an image restoration model.

In this step, if the number of sample restoration types corresponding to the sample image is one, the image restoration model is the sub-restoration model corresponding to the sample restoration type, and the sample image and sample text information are input into the sub-restoration model corresponding to the sample restoration type to obtain the restored target sample image. Then, the target sample image and the sample restoration image are compared, and the sub-restoration model is trained according to the difference between the target sample image and the sample restoration image to obtain the image restoration model. For specific information on how to obtain the sub-restoration model through training, refer to the subsequent embodiments, which will not be described in detail here.

S303: If the number of sample restoration types corresponding to the sample image is more than one, respectively input the sample image and sample text information into the sub-restoration model corresponding to each sample restoration type to obtain the restored target sample images output by the multiple sub-restoration models; according to the weight corresponding to each sample restoration type, fuse the multiple restored target sample images to obtain a fused image; and based on the difference between the fused image and the sample restoration image, adjust the weights corresponding to the multiple sample restoration types to obtain the image restoration model.

Exemplarily, if there are multiple target restoration types, the image restoration model includes multiple sub-restoration models corresponding to the sample restoration types one by one. The sample image and sample text information are respectively input into the sub-restoration model corresponding to each sample restoration type to obtain the restored target sample images output by the multiple sub-restoration models. According to the weight corresponding to each sample restoration type, the multiple restored target sample images are fused to obtain a fused image (i.e., the restored sample image). The fused image is compared with the sample restoration image, and the weights corresponding to the multiple sample restoration types are adjusted according to the difference between the fused image and the sample restoration image. When the difference between the fused image and the sample restoration image is less than a threshold, the image restoration model is obtained. Here, the contribution of different sample restoration types to the final restored sample image may be controlled by adjusting the values of the weights corresponding to different sample restoration types. For the specific process of obtaining the sub-restoration model through training, refer to the subsequent embodiments, which will not be repeated here.

Further, optionally, according to the weight corresponding to each sample restoration type, multiple restored target sample images are fused to obtain a fused image, which may include: for each pixel at a same pixel position in the multiple restored target sample images, according to the pixel value of the pixel and the weight corresponding to the pixel, obtaining a weighted target pixel value; according to the weighted target pixel value at each pixel position, obtaining a fused image. Specifically, the above process may be used to obtain the fused image.

The image restoration model training method provided in the embodiments of the present disclosure obtains a sample image, sample text information corresponding to the sample image, a sample restoration type and a sample restoration image, where the sample text information is used to describe the sample image. If the number of sample restoration types corresponding to the sample image is one, the sample image and the sample text information are input into a sub-restoration model corresponding to the sample restoration type to obtain a restored target sample image, and the sub-restoration model is trained according to the target sample image and the sample restoration image to obtain an image restoration model. If the number of sample restoration types corresponding to the sample image is more than one, the sample image and the sample text information are respectively input into a sub-restoration model corresponding to each sample restoration type to obtain restored target sample images respectively output by multiple sub-restoration models. According to the weight corresponding to each sample restoration type, multiple restored target sample images are fused to obtain a fused image. Based on the difference between the fused image and the sample restoration image, the weights corresponding to multiple sample restoration types are adjusted to obtain an image restoration model. The embodiments of the present disclosure perform corresponding training on the image restoration model according to the number of sample restoration types corresponding to the sample image. In particular, when the number of sample restoration types corresponding to the sample image is more than one, multiple restored target sample images are fused to obtain a restored sample image with better effect, thereby effectively improving the restoration effect of the image restoration model, so that the image restoration model may obtain a more realistic restoration effect in the actual restoration process.

FIG. 4 is a flow chart of a sub-restoration model training method in accordance with an embodiment of the present disclosure. As shown in FIG. 4, the method of the embodiments of the present disclosure may include:

S401: Input the sample image into an encoder network included in the initial sub-restoration model to extract image features and obtain an image feature sequence corresponding to the sample image.

Exemplarily, based on the embodiment shown in FIG. 3, after obtaining the sample image, the sample text information corresponding to the sample image, the sample restoration type, and the sample restoration image, the sample image may be input into the encoder network contained in the initial sub-restoration model for image feature extraction to obtain an image feature sequence corresponding to the sample image.

Further, optionally, the sample image is input into the encoder network included in the initial sub-restoration model to extract image features to obtain an image feature sequence corresponding to the sample image, which may include: performing convolution processing on the sample image through a convolutional layer included in the encoder network to obtain a sample feature map corresponding to the sample image; performing a linear transformation on the sample feature map based on the activation function included in the encoder network to obtain a linearly transformed sample feature map; and performing pooling processing on the linearly transformed sample feature map to obtain an image feature sequence corresponding to the sample image.

Exemplarily, the sample image is input into the encoder network included in the initial sub-restoration model to extract deep learning features in the sample image. For example, the sample image pixel data is used as the input of the encoder network, and the sample image may be convolved through multiple convolutional layers included in the encoder network to obtain a sample feature map corresponding to the sample image. The sample feature map is linearly transformed based on the activation function included in the encoder network to obtain a linearly transformed sample feature map, where the activation function is, for example, a rectified linear activation function or ReLU. The linearly transformed sample feature map is pooled to reduce the spatial size of the sample feature map, thereby obtaining an image feature sequence corresponding to the sample image. In some embodiments, the target key feature in the sample image may be a texture structure in the sample image, for example, the extension direction of the branches of a tree and the thickness of the branches may be the target key features.

S402: Input the sample text information into a trained word vector model to obtain a semantic feature sequence corresponding to the sample text information.

Exemplarily, the sample text information is input into a trained word vector model, the sample text information is segmented to obtain multiple words, the word vector of each word is obtained, and then the word vectors of the multiple words are combined in a certain order to obtain a semantic feature sequence corresponding to the sample text information.

It should be noted that the embodiments of the present disclosure do not limit the order in which steps S401 and S402 are executed.

S403: Perform stitching and fusion processing on the image feature sequence and the semantic feature sequence to obtain a target feature sequence.

In this step, after obtaining the image feature sequence corresponding to the sample image and the semantic feature sequence corresponding to the sample text information, the image feature sequence and the semantic feature sequence may be stitched and fused to obtain a target feature sequence.

S404: Send the target feature sequence to the decoder network for image restoration processing to obtain a restored target sample image.

In this step, after obtaining the target feature sequence, the target feature sequence may be sent to the decoder network. The decoder network gradually restores and reconstructs the restored image through, for example, a series of deconvolution layers and upsampling, thereby obtaining a restored target sample image.

Further, optionally, sending the target feature sequence to the decoder network for image restoration processing to obtain a restored target sample image may include: performing image restoration processing on the target feature sequence through a fully connected layer included in the decoder network to obtain a restored target sample image.

It is to be noted that the fully connected layer included in the decoder network may map the target feature sequence to the dimension of the image, thereby obtaining the restored target sample image.

S405: Iteratively train the initial sub-restoration model based on a loss function until the function value of the loss function is less than a loss threshold, thereby obtaining a trained sub-restoration model.

Here, the loss function is used to represent the difference between the restored target sample image and the sample restoration image.

Exemplarily, the loss function may be used to measure the difference between the restored image output by the initial sub-restoration model and the sample restoration image. The parameters of the initial sub-restoration model are optimized by minimizing the function value of the loss function so that the restored image output by the initial sub-restoration model is as close to the sample restoration image as possible, thereby obtaining a trained sub-restoration model and a restored target sample image output by the trained sub-restoration model.

The sub-restoration model training method provided in the embodiments of the present disclosure is to obtain an image feature sequence corresponding to the sample image by inputting a sample image into the encoder network included in the initial sub-restoration model for image feature extraction. The sample text information is input into the trained word vector model to obtain a semantic feature sequence corresponding to the sample text information. The image feature sequence and the semantic feature sequence are stitched and fused to obtain a target feature sequence. The target feature sequence is sent to the decoder network for image restoration processing to obtain a restored target sample image. The initial sub-restoration model is iteratively trained based on the loss function until the function value of the loss function is less than the loss threshold, thereby obtaining a trained sub-restoration model. In the embodiments of the present disclosure, the target feature sequence is obtained by stitching and fusing the image feature sequence corresponding to the sample image and the semantic feature sequence corresponding to the sample text information, where the sample text information may more comprehensively and exhaustively describe the image information of the sample image accurately, so that the obtained trained sub-restoration model may be more accurately used for image restoration of to-be-restored images.

The following are device embodiments of the present disclosure, which may be used to execute the method embodiments of the present disclosure. For details not disclosed in the device embodiments of the present disclosure, refer to the method embodiments of the present disclosure.

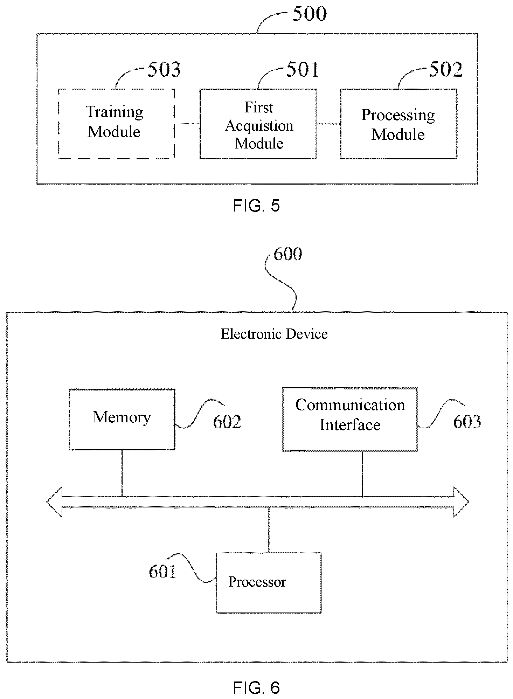

FIG. 5 illustrates an image restoration device in accordance with an embodiment of the present disclosure. As shown in FIG. 5, the image restoration device 500 in the embodiments of the present disclosure includes a first acquisition module 501 and a processing module 502.

The first acquisition module 501 is configured to acquire a to-be-restored image, target text information corresponding to the to-be-restored image, and a target restoration type, where the target text information is used to describe the to-be-restored image.

The processing module 502 is configured to input the to-be-restored image, target text information and target restoration type into an image restoration model for image restoration processing to obtain the restored target image corresponding to the to-be-restored image. The image restoration model is obtained by training sub-restoration models corresponding to the different restoration types contained therein.

In some embodiments, the processing module 502 may be specifically configured to: input the to-be-restored image, the target text information and the target restoration type into the image restoration model; if the number of target restoration types is one, input the to-be-restored image and the target text information into a sub-restoration model corresponding to the target restoration type to obtain the restored target image corresponding to the to-be-restored image; if the number of target restoration types is more than one, respectively input the to-be-restored image and the target text information into the sub-restoration model corresponding to each target restoration type to obtain restored images output by the multiple sub-restoration models respectively; according to the weight corresponding to each target restoration type, fuse the multiple restored images to obtain the restored target image corresponding to the to-be-restored image.

Optionally, when the processing module 502 is configured to fuse multiple restored images according to the weight corresponding to each target restoration type to obtain a restored target image corresponding to the to-be-restored image, the processing module 502 may be specifically configured to: for each pixel at the same pixel position in the multiple restored images, obtain the weighted target pixel value according to the pixel value of the pixel and the weight corresponding to the pixel; and obtain the restored target image corresponding to the to-be-restored image according to the target pixel value at each pixel position.

Optionally, the image restoration device 500 may further include a training module 503, which is configured to train and obtain an image restoration model in the following manner: obtaining a sample image, sample text information corresponding to the sample image, a sample restoration type and a sample restoration image, where the sample text information is used to describe the sample image. If the number of sample restoration types corresponding to the sample image is one, the sample image and the sample text information are input into a sub-restoration model corresponding to the sample restoration type to obtain a restored target sample image, and the sub-restoration model is trained according to the target sample image and the sample restoration image to obtain an image restoration model. If the number of sample restoration types corresponding to the sample image is more than one, the sample image and the sample text information are respectively input into a sub-restoration model corresponding to each sample restoration type to obtain restored target sample images outputted by multiple sub-restoration models. According to the weight corresponding to each sample restoration type, multiple restored target sample images are fused to obtain a fused image. Based on the difference between the fused image and the sample restoration image, the weights corresponding to multiple sample restoration types are adjusted to obtain an image restoration model.

Optionally, the training module 503 may also be configured to train a sub-restoration model in the following manner: input the sample image into an encoder network contained in the initial sub-restoration model to extract image features, and obtain an image feature sequence corresponding to the sample image; input the sample text information into the trained word vector model to obtain a semantic feature sequence corresponding to the sample text information; perform stitching and fusion processing on the image feature sequence and the semantic feature sequence to obtain a target feature sequence; send the target feature sequence to the decoder network for image restoration processing to obtain a restored target sample image; and iteratively train the initial sub-restoration model based on the loss function until the function value of the loss function is less than the loss threshold, and obtain a trained sub-restoration model. Here, the loss function is used to represent the difference between the restored target sample image and the sample restoration image.

Optionally, when the training module 503 is configured to input the sample image into the encoder network included in the initial sub-restoration model to extract image features and obtain an image feature sequence corresponding to the sample image, the training module 503 is specifically configured to: perform convolution processing on the sample image through the convolution layer included in the encoder network to obtain a sample feature map corresponding to the sample image; perform a linear transformation on the sample feature map based on the activation function included in the encoder network to obtain a linearly transformed sample feature map; and perform pooling processing on the linearly transformed sample feature map to obtain an image feature sequence corresponding to the sample image.

Optionally, when the training module 503 is configured to send the target feature sequence to the decoder network for image restoration processing to obtain a restored target sample image, the training module 503 is specifically configured to: perform image restoration processing on the target feature sequence through the fully connected layer included in the decoder network to obtain a restored target sample image.

In some embodiments, the restoration type includes at least one of image noise, image blur, image occlusion, and image loss, and the target text information is information obtained after the user describes the to-be-restored image.

The devices of the present disclosure may be configured to execute the technical solution of any of the above-mentioned method embodiments, and its implementation principle and technical effects are similar, which will not be repeated here.

FIG. 6 is a schematic structural diagram of an electronic device in accordance with an embodiment of the present disclosure. As shown in FIG. 6, the electronic device 600 may include: at least one processor 601 and a memory 602.

The memory 602 is configured to store programs. Specifically, the program may include program codes, and the program codes include computer-executable instructions.

The memory 602 may include a high-speed random-access memory (RAM), and may also include a non-volatile memory, such as at least one disk memory.

The processor 601 is configured to execute the image restoration methods described in the aforementioned method embodiments. The processor 601 may be a central processing unit (CPU), or an application-specific integrated circuit (ASIC), or one or more integrated circuits configured to implement the embodiments of the present disclosure. Specifically, when implementing the image restoration methods described in the aforementioned method embodiments, the electronic device may be, for example, an electronic device with processing functions such as a terminal or a server.

Optionally, the electronic device 600 may further include a communication interface 603. In one embodiment, if the communication interface 603, the memory 602 and the processor 601 are implemented independently, the communication interface 603, the memory 602 and the processor 601 may be interconnected through a bus and communicate with each other. The bus may be an industry standard architecture (ISA) bus, a peripheral component (PCI) bus or an extended industry standard architecture (EISA) bus, etc. The bus may be divided into an address bus, a data bus, a control bus, etc., but it does not mean that there is only one bus or one type of bus.

Optionally, in one embodiment, if the communication interface 603, the memory 602 and the processor 601 are integrated on a chip, the communication interface 603, the memory 602 and the processor 601 may communicate through an internal interface.

The present disclosure also provides a computer-readable storage medium, in which computer program instructions are stored. When a processor executes the computer program instructions, the aforementioned image restoration methods are implemented.

The present disclosure also provides an image restoration device, including a processor, where the processor is configured to execute the following program modules stored in a memory: a first acquisition module, configured to acquire a to-be-restored image, target text information corresponding to the to-be-restored image, and a target restoration type, where the target text information is used to describe the to-be-restored image; a processing module, configured to input the to-be-restored image, the target text information, and the target restoration type into an image restoration model for image restoration processing to obtain a restored target image corresponding to the to-be-restored image, where the image restoration model is obtained based on training sub-restoration models corresponding to different restoration types.

The present disclosure also provides a computer program product, including a computer program, which implements the above image restoration methods when executed by a processor.

The computer-readable storage medium mentioned above may be implemented by any type of volatile or non-volatile storage device or a combination thereof, such as static random-access memory (SRAM), electrically erasable programmable read-only memory (EEPROM), erasable programmable read-only memory (EPROM), programmable read - only memory (PROM), read-only memory (ROM), magnetic storage, flash memory, magnetic disk or optical disk. The readable storage medium may be any available medium that may be accessed by a general or special-purpose computer.

An exemplary readable storage medium is coupled to the processor so that the processor may read information from the readable storage medium and write information to the readable storage medium. Apparently, the readable storage medium may also be a component of the processor. The processor and the readable storage medium may be located in a dedicated integrated circuit. Apparently, the processor and the readable storage medium may also exist in the image restoration device as discrete components.

Those skilled in the art may understand that all or part of the steps of implementing the above-mentioned method embodiments may be completed by hardware related to program instructions. The program may be stored in a computer-readable storage medium. When the program is executed, the steps of the aforementioned method embodiments are executed. The storage medium includes ROM, RAM, disk or optical disk and other media that may store program codes.

Eventually, it should be noted that the above embodiments are only used to illustrate the technical solutions of the present disclosure, rather than to limit it. Although the present disclosure has been described in detail with reference to the specific embodiments, those skilled in the art should understand that they may still modify the technical solutions described in these embodiments or replace some or all of the technical features therein with equivalents. However, these modifications or replacements do not cause the essence of the corresponding technical solutions to deviate from the scope of the technical solutions of the embodiments of the present disclosure.

**Claims**

1. An image restoration method, the method comprising:

   acquiring a to-be-restored image, target text information corresponding to the to-be-restored image, and a target restoration type, wherein the target text information is used to describe the to-be-restored image; and
   inputting the to-be-restored image, the target text information and the target restoration type into an image restoration model for image restoration processing to obtain a restored target image corresponding to the to-be-restored image, wherein the image restoration model is obtained by training sub-restoration models corresponding to different restoration types.

2. The image restoration method according to claim 1, wherein inputting the to-be-restored image, the target text information and the target restoration type into the image restoration model for image restoration processing to obtain the restored target image corresponding to the to-be-restored image comprises:

   inputting the to-be-restored image, the target text information and the target restoration type into the image restoration model;
   if a quantity of target restoration types is one, inputting the to-be-restored image and the target text information into the sub-restoration model corresponding to the target restoration type to obtain the restored target image corresponding to the to-be-restored image; and
   if the quantity of target restoration types is more than one, inputting the to-be-restored image and the target text information respectively into a sub-restoration model corresponding to each target restoration type to obtain multiple restored images respectively output by sub-restoration models, and fusing the multiple restored images according to a weight corresponding to each target restoration type to obtain the restored target image corresponding to the to-be-restored image.

3. The image restoration method according to claim 2, wherein fusing the multiple restored images according to the weight corresponding to each target restoration type to obtain the restored target image corresponding to the to-be-restored image comprises:

   for each pixel at a same pixel position in the multiple restored images, obtaining a weighted target pixel value according to a pixel value of the pixel and a weight corresponding to the pixel; and
   obtaining the restored target image corresponding to the to-be-restored image according to the target pixel value at each pixel position.

4. The image restoration method according to claim 3, wherein the image restoration model is trained by:

   acquiring a sample image, sample text information corresponding to the sample image, a quantity of sample restoration type, and a sample restoration image, and the sample text information is used to describe the sample image;
   if the quantity of sample restoration type corresponding to the sample image is one, inputting the sample image and the sample text information into a sub-restoration model corresponding to a sample restoration type to obtain a restored target sample image, and training the sub-restoration model according to the restored target sample image and the sample restoration image to obtain the image restoration model; and
   if the quantity of sample restoration type is more than one, inputting the sample image and the sample text information respectively into a sub-restoration model corresponding to each sample restoration type to obtain multiple restored target sample images respectively output by sub-restoration models, fusing the multiple restored target sample images according to a weight corresponding to each sample restoration type to obtain a fused image, and based on a difference between the fused image and the sample restoration image, adjusting weights corresponding to multiple sample restoration types to obtain the image restoration model.

5. The image restoration method according to claim 4, wherein the sub-restoration model is trained by:

   inputting the sample image into an encoder network contained in an initial sub-restoration model to extract image features to obtain an image feature sequence corresponding to the sample image;
   inputting the sample text information into a trained word vector model to obtain a semantic feature sequence corresponding to the sample text information;
   performing stitching and fusing on the image feature sequence and the semantic feature sequence to obtain a target feature sequence;
   sending the target feature sequence to a decoder network for image restoration processing to obtain the restored target sample image; and
   iteratively training the initial sub-restoration model based on a loss function until a function value of the loss function is less than a loss threshold, thereby obtaining the trained sub-restoration model, wherein the loss function is used to represent a difference between the restored target sample image and the sample restoration image.

6. The image restoration method according to claim 5, wherein inputting the sample image into the encoder network contained in the initial sub-restoration model to extract image features to obtain the image feature sequence corresponding to the sample image comprises:

   performing convolution processing on the sample image through a convolution layer contained in the encoder network to obtain a sample feature map corresponding to the sample image;
   performing a linear transformation on the sample feature map based on an activation function contained in the encoder network to obtain a linearly transformed sample feature map; and
   performing pooling on the linearly transformed sample feature map to obtain the image feature sequence corresponding to the sample image.

7. The image restoration method according to claim 5, wherein sending the target feature sequence to the decoder network for image restoration processing to obtain the restored target sample image comprises:
   performing image restoration processing on the target feature sequence by using a fully connected layer contained in the decoder network to obtain the restored target sample image.

8. The image restoration method according to any one of claims 1 to 5, wherein restoration types include at least one of image noise, image blur, image occlusion and image loss, and the target text information is information obtained after a user describes the to-be-restored image.

9. An image restoration device, comprising:

   a first acquisition module, configured to acquire a to-be-restored image, target text information corresponding to the to-be-restored image and a target restoration type, wherein the target text information is used to describe the to-be-restored image; and

a processing module, configured to input the to-be-restored image, the target text information and the target restoration type into an image restoration model for image restoration processing to obtain a restored target image corresponding to the to-be-restored image, wherein the image restoration model is obtained by training sub-restoration models corresponding to different restoration types.

10. An electronic device, comprising:

a processor; and
a memory communicatively coupled to the processor, the memory storing computer-executable instructions that, when executed by the processor, cause the computer-executable instructions stored in the memory to implement the image restoration method according to any one of claims 1 to 8.

11. A computer-readable storage medium, storing computer program instructions that, when executed, implement the image restoration method according to any one of claims 1 to 8.

to-be-restored image

obtain restored target image

FIG. 1

Obtain to-be-restored image, target text information corresponding to to-be-restored image, and target restoration type, where the target text information is used to describe to-be-restored image

S201

Input to-be-restored image, target text information and target restoration type into image restoration model for image restoration processing to obtain restored target image corresponding to to-be-restored image, where the image restoration model is obtained by training sub-restoration models corresponding to different restoration types

S202

FIG. 2

Obtain sample image, sample text information corresponding to sample image, sample restoration type, and sample restoration image, where sample text information is used to describe sample image ⟋\S301

If number of sample restoration types corresponding to sample image is one, input sample image and sample text information into sub-restoration model corresponding to sample restoration type to obtain restored target sample image, and train the sub-restoration model according to target sample image and the sample restoration image to obtain image restoration model ⟋\S302

If number of sample restoration types corresponding to the sample image is more than one, respectively input sample image and sample text information into sub-restoration model corresponding to each sample restoration type to obtain restored target sample images output by the multiple sub-restoration models; according to weight corresponding to each sample restoration type, fuse multiple restored target sample images to obtain fused image; based on difference between fused image and sample restoration image, adjust weights corresponding to multiple sample restoration types to obtain the image restoration model ⟋\S303

FIG. 3

Input sample image into encoder network included in initial sub-restoration model to extract image features and obtain image feature sequence corresponding to sample image ⟍⟋\S401

Input sample text information into trained word vector model to obtain semantic feature sequence corresponding to sample text information ⟍⟋\S402

Perform stitching and fusion processing on image feature sequence and semantic feature sequence to obtain target feature sequence ⟍⟋\S403

Send target feature sequence to decoder network for image restoration processing to obtain restored target sample image ⟍⟋\S404

Iteratively train initial sub-restoration model based on loss function until function value of loss function is less than loss threshold, thereby obtaining trained sub-restoration model ⟍⟋\S405

FIG. 4

500

503
Training Module

501
First Acquistion Module

502
Processing Module

FIG. 5

600

Electronic Device

Memory
602

Communication Interface
603

601
Processor

FIG. 6

Europäisches
Patentamt

European
Patent Office

Office européen
des brevets

# EUROPEAN SEARCH REPORT

**Application Number**

EP 24 21 1601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Qi Chenyang ET AL: "TIP: Text-Driven Image Processing with Semantic and Restoration Instructions", , 18 December 2023 (2023-12-18), pages 1-15, XP093260735, Retrieved from the Internet: URL:https://arxiv.org/pdf/2312.11595v1 * page 2 - page 6 * * page 8 - page 8 * * page 13 - page 14 * | 1-11 | INV. G06T5/60 |
| A | WANG XINTAO ET AL: "Real-ESRGAN: Training Real-World Blind Super-Resolution with Pure Synthetic Data", 2021 IEEE/CVF INTERNATIONAL CONFERENCE ON COMPUTER VISION WORKSHOPS (ICCVW), IEEE, 11 October 2021 (2021-10-11), pages 1905-1914, XP034027931, DOI: 10.1109/ICCVW54120.2021.00217 [retrieved on 2021-11-08] * page 1 * | 1-11 | |
| A | Zhang Lvmin ET AL: "Adding Conditional Control to Text-to-Image Diffusion Models", , 26 November 2023 (2023-11-26), pages 1-12, XP093261288, Retrieved from the Internet: URL:https://arxiv.org/pdf/2302.05543 * page 1 * | 1-11 | TECHNICAL FIELDS SEARCHED (IPC) G06T |

The present search report has been drawn up for all claims

| Place of search | Date of completion of the search | Examiner |
|---|---|---|
| Munich | 24 March 2025 | Üreyen, Soner |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410014753